# EUROPEAN PATENT APPLICATION

(11) **EP 3 387 963 A1**
(43) Date of publication of application: **17.10.2018**
(21) Application number: 17170679.9
(22) Date of filing: 11.05.2017
(51) Int. Cl.: A47J 31/06, A47J 31/20

(54) **TEA STEEPING ASSEMBLY AND TEA STEAMING HEALTH KETTLE**

(30) Priority: 12.04.2017 CN 201710235880
(71) Applicant: X. J. Electric (Hubei) Co., Ltd., Huanggang, Hubei (CN)
(72) Inventor: PAN, Yun, Huanggang, Hubei (CN)
(74) Representative: Wilson Gunn

(57) **Abstract**

The present invention belongs to the technical field of tea sets, and provides a tea steeping assembly and tea steaming health kettle. The tea steeping assembly comprises a filtering cup arranged in a kettle body and configured to accommodate tea leaves, a lifting rod connected with the filtering cup and configured to lift the or lower the filtering cup, a control mechanism matching with the lifting rod rollingly and configured to control the lifting rod to ascend or descend, and a cover body covering on the kettle body in a snap-fit manner. In the present invention, by putting tea leaves into the filtering cup, placing the filtering cup inside the kettle body, and using the rolling cooperation between the control mechanism and the lifting rod to control the lifting rod to ascend or descend, the filtering cup can be easily detached and mounted, a concentration of tea water can be controlled conveniently, there is no need to steep tea additionally, so that it is convenient to steep tea and remove tea residues.

## Description

### THCHNICAL FIELD

The present invention relates to the technical field of tea sets, and more particularly, relates to a tea steeping assembly and tea steaming health kettle.

### BACKGROUND

Tea culture takes tea as a carrier and broadcasts various arts through this carrier. Tea culture is a part of traditional excellent cultures of China, and has very abundant contents. Main content of Chinese tea ceremony is particular about five factors, that is, tea leaves, tea water, heat control, tea set, and the environment. Therefore, a utensil for making tea is a very important part of tea culture.

Hobbyists of tea-making and tea-tasting are particular about requirements for the utensils for making tea. When tea is steeped, a kettle for making tea is usually selected. However, as for existing electric kettle products in the market, a body of an electric kettle has only a function of heating water; if steeping tea or boiling tea is required, it may be necessary to purchase some other utensils, hot water heated by the electric kettle is poured into such a utensil, until tea leaves has been steeped for a certain time, tea can be drunk. Therefore, making tea independently is very complicated and is inconvenient to remove tea residues.

### SUMMARY OF THE INVENTION

A purpose of the present invention is providing a tea steeping assembly and tea steaming health kettle, which aim at solving the technical problem in the prior art that it is inconvenient for an electric kettle to make tea and remove tea residues.

The present invention is implemented as follows: a tea steeping assembly, comprising a filtering cup arranged in a kettle body and configured to accommodate tea leaves, a lifting rod connected with the filtering cup and configured to lift or lower the filtering cup, a control mechanism matching with the lifting rod rollingly and configured to control the lifting rod to ascend or descend, and a cover body covering on the kettle body in a snap-fit manner.

As preferable technical solutions of the present invention:
further, the control mechanism comprises roll balls matching with the lifting rod rollingly, elastic elements connected with the roll balls and configured to push the roll balls to rotate, and a support frame configured to support the roll balls and the elastic elements; wherein the lifting rod is provided thereon with a limiting groove matching with the roll balls and configured to limit a lifting height of the lifting rod.

Furthermore, there are three groups of control mechanisms, and the three groups of control mechanisms are distributed along a radial direction of the lifting rod uniformly.

Furthermore, the control mechanism further comprises a support frame cover covering on the support cover in a snap-fit manner, and a lower end of the support frame cover is connected with the cover body.

Furthermore, the support frame cover comprises a connecting casing fixed with the cover body, a first circular hole arranged on the connecting casing and configured to be passed through by the lifting rod, a plurality of first locating plungers arranged in the connecting casing and configured to be connected with the cover body, and a fastening block arranged in the connecting casing and configured to engage the support frame.

Furthermore, the cover body comprises an upper cover body and a lower cover body inserted in the upper cover body; the upper cover body comprises a second circular hole configured to be passed through by the lifting rod, a plurality of second locating plungers arranged around the second circular hole, a connection ring arranged at a lower end surface of the upper cover body and configured to be connected with the lower cover body, and a plurality of insertion holes distributed at intervals on the upper cover body; the lower cover body comprises a third circular hole configured to be passed through by the lifting rod, and a plurality of insertion blocks matching with the insertion holes.

Furthermore, the connection ring is provided thereon with one or more bayonet(s), the lower cover body is provided thereon with one or more fastener(s) configured to engage in the bayonet(s); each bayonet is provided with a connecting pole communicated with the bayonet, the connecting pole is provided therein with a spring, and one end of the spring is connected with a corresponding fastener.

Furthermore, one end of the lifting rod is provided with a rod cap configured to lift the lifting rod or press the lifting rod down; the rod cap is provided thereon with a rod cap protection plate configured to protect the rod cap, and the rod cap protection plate is in a snap-fit connection with the rod cap.

Another purpose of the present invention is providing a tea steaming health kettle comprising the aforementioned tea steeping assembly.

Further, the kettle body is a heat-resistant glass cup.

The technical advantages of the present invention over the prior art are as follows: by arranging the filtering cup in the kettle body, and by using the rolling cooperation between the control mechanism and the lifting rod to control the lifting rod to ascend or descend, the filtering cup can be easily detached and mounted; in use, tea or medicinal materials in a required amount is put into the filtering cup of the tea steeping assembly, different temperature buttons are selected as needed, and tea steeping operation can be completed during a water heating process. Meanwhile, the filtering cup can be ascended or descended, a time length of tea steeping can be selected as required, a concentration of tea water can be controlled, and there is no need to make tea independently. Therefore, it is convenient to make tea and remove tea residues.

### BRIEF DESCRIPTION OF THE DRAWINGS

In order to explain the embodiments of the present invention more clearly, a brief introduction regarding the accompanying drawings that need to be used for describing embodiments of the present invention or the prior art is given below; it is obvious that the accompanying drawings described as follows are only some embodiments of the present invention, for those skilled in the art, other drawings can also be obtained according to the current drawings on the premise of paying no creative labor.
FIG.1 illustrates one structural schematic view of a tea steaming health kettle provided by an embodiment of the present invention, wherein a filtering cup of the tea steaming kettle is in a descending state;
FIG. 2 illustrates another structural schematic view of the tea steaming health kettle provided by the embodiment of the present invention, wherein the filtering cup of the tea steaming kettle is in a lifting state;
FIG. 3 illustrates an exploded view of the tea steaming health kettle provided by the embodiment of the present invention;
FIG. 4 illustrates an exploded view of a tea steeping assembly provided by the embodiment of the present invention;
FIG. 5 illustrates a structural schematic view of a support frame cover of the tea steeping assembly provided by the embodiment of the present invention;
FIG. 6 illustrates a top view of an upper cover body of the tea steeping assembly provided by the embodiment of the present invention;
FIG. 7 illustrates a bottom view of the upper cover body of the tea steeping assembly provided by the embodiment of the present invention;
FIG. 8 illustrates a perspective view of the upper cover body of the tea steeping assembly provided by the embodiment of the present invention;
FIG. 9 illustrates a perspective view of a lower cover body of the tea steeping assembly provided by the embodiment of the present invention;
FIG. 10 illustrates a partial schematic view of a control mechanism of the tea steeping assembly provided by the embodiment of the present invention.

### Explanation of reference numbers in the accompanying figures

In the figures: 100-tea steeping assembly; 101-the rod cap protection plate; 102-the rod cap; 103-the upper cover body protection plate; 104-support frame cover; 1041-the connecting casing; 1042-the first circular hole; 1043-the fastening block; 1044-the first locating plunger; 105-the first spring; 106-the roll ball; 107-the support frame; 108-the upper cover body; 1081-the second circular hole; 1082-the second locating plunger; 1083-the connection ring; 1084-the bayonets; 1085-the connecting pole; 109-bolt; 110-the fastener; 111-the second spring; 112-the lower cover body; 1121-the third circular hole; 1122-the insertion blocks; 113-the lifting rod; 114-a flat gasket; 115-the filtering cup protection plate; 116-the strainer support frame; 117-nut; 118-the filtering cup; 200-the kettle body; 300-a charging base.

### DETAILED DESCRIPTION OF THE PREFERRED EMBODIMENT

Herein, embodiments of the present invention are described in detail, and examples of the embodiment are illustrated in the accompanying figures; wherein, an always unchanged reference number or similar reference numbers represent(s) identical or similar components or components having identical or similar functionalities. The embodiment described below with reference to the accompanying figures is illustrative and intended to illustrate the present invention, but should not be considered as any limitation to the present invention.

In the description of the present invention, it needs to be understood that, directions or location relationships indicated by terms such as "length", "width", "up", "down", "front", "rear", "left", "right", "vertical", "horizontal", "top", "bottom", "inside", "outside", and so on are the directions or location relationships shown in the accompanying figures, which are only intended to describe the present invention conveniently and simplify the description, but not to indicate or imply that an indicated device or component must have specific locations or be constructed and manipulated according to specific locations; therefore, these terms shouldn't be considered as any limitation to the present invention.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly comprise one or more such technical feature(s). In the description of the present invention, "a plurality of" means two or more, unless there is additional explicit and specific limitation.

In the present invention, unless there is additional explicit stipulation and limitation, terms such as "mount", "connect with each other", "connect", "fix", and so on should be generalizedly interpreted, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present invention can be interpreted according to specific conditions.

In order to make the purpose, the technical solution and the advantages of the present invention be clearer and more understandable, herein, the present invention is further described in detail below with reference to accompanying figures and embodiments.

The present invention provides a tea steeping assembly and tea steaming health kettle, by putting tea leaves into a filtering cup 118, placing the filtering cup 118 in a kettle body 200, and using a rolling cooperation between a control mechanism and a lifting rod 113 to control the lifting rod 113 to ascend or descend, the filtering cup 118 can be easily detached or mounted, a concentration of tea water can be conveniently controlled, there is no need to make tea additionally, so that it is convenient to steep tea and remove tea residues.

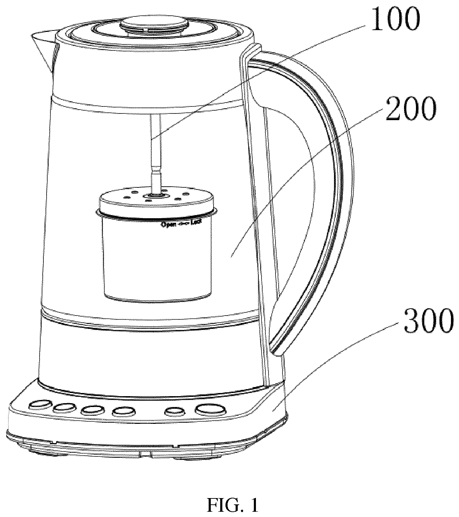

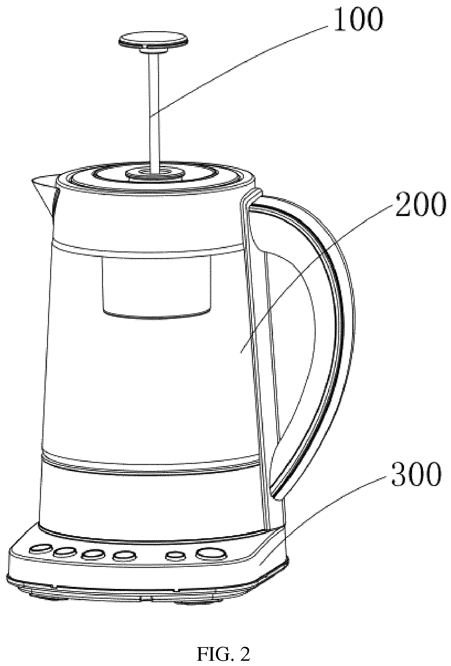

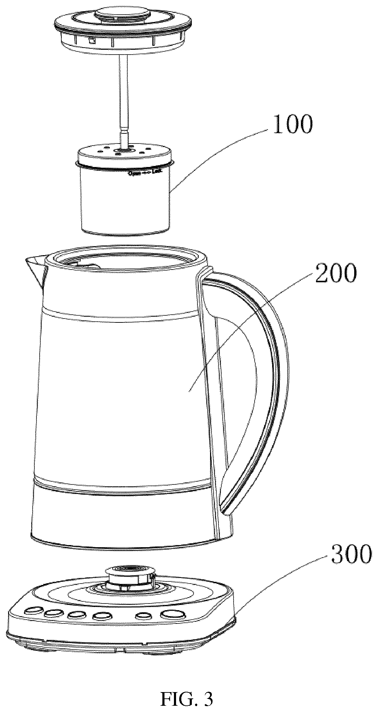

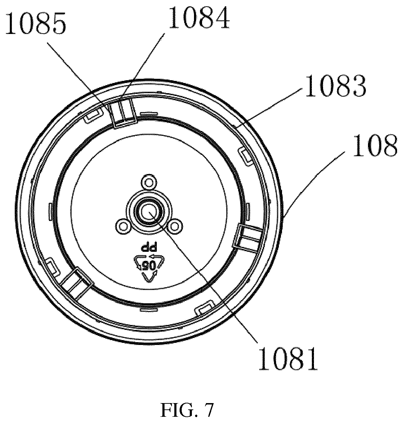

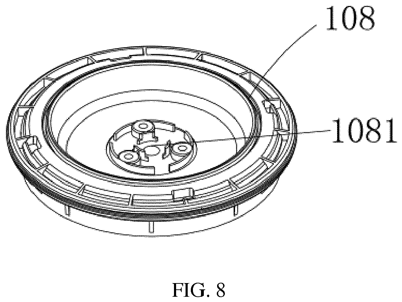

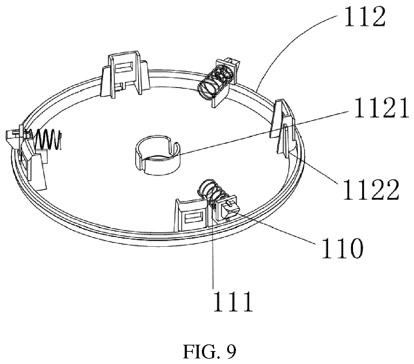

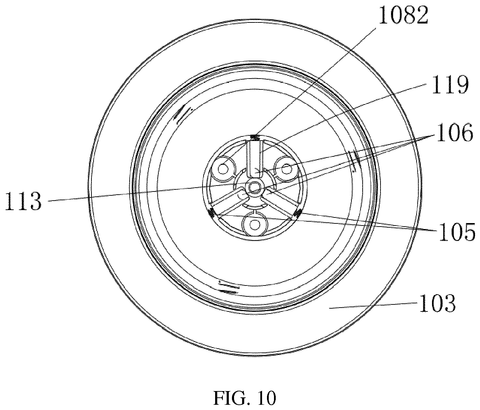

Please refer to FIGS. 1-10, the tea assembly 100 comprises a filtering cup 118 arranged in the kettle body 200 and configured to accommodate tea leaves, the lifting rod 113 connected with the filtering cup 118 and configured to lift or lower the filtering cup 118, the control mechanism matching with the lifting rod 113 rollingly and configured to control the lifting rod 113 to ascend or descend, and a cover body covering on the kettle body 200 in a snap-fit manner.

In the tea steeping assembly 100 provided by the embodiment of the present invention, by arranging the filtering cup 118 in the kettle body 200, and by using the rolling cooperation between the control mechanism and the lifting rod 113 to control the lifting rod 113 to ascend or descend, the filtering cup 118 can be easily detached or mounted; in use, tea or medicinal materials in a required amount is put into the filtering cup 118 of the tea steeping assembly, different temperature buttons are selected as needed, and tea steeping operation can be completed during a water heating process. Meanwhile, the filtering cup 118 can be ascended or descended, a time length of tea steeping can be selected as required, the concentration of tea water can be controlled, and there is no need to make tea independently. Therefore, it is convenient to make tea and remove tea residues.

Preferably, the filtering cup 118 can be a stainless filtering cup, preferably, the filtering cup 118 having a food grade of SUS304# is adopted, the filtering cup 118 can be conveniently detached or mounted, and it is more convenient to place tea leaves or clean.

In addition, the control mechanism in this embodiment comprises roll balls 106 matching with the lifting rod 113 in a rolling manner, elastic elements connected with the roll balls 106 and configured to push the roll balls 106 to roll, and a support frame 107 configured to support the roll balls 106 and the elastic elements. The lifting rod 113 is provided thereon with a limiting groove that cooperates with the roll balls 106 to limit a lifting height of the lifting rod 113. Preferably, the roll balls 106 in this embodiment are designed to be steel balls, the limiting groove is designed to be located at a lower part of the lifting rod 113. Specifically, in a movement process, the lifting rod 113 forms a rolling friction with spherical surfaces of the steel balls, when reaching the location of the limiting groove at the lower part of the lifting rod 113, the steel balls enter the limiting groove and are positioned. When the multifunctional filtering cup 118 requires being lowered, a rod cap 102 is pressed, such that the steel balls rolled out of the limiting groove; in this way, the lifting rod 113 can smoothly and effortlessly drive the multifunctional filtering cup 118 to move upwardly or downwardly. This structure is simple, practical, convenient and reliable.

Preferably, each of the elastic elements in this embodiment is designed as a first spring 105. Further, there are three groups of control mechanisms and the three groups of control mechanisms are distributed along a radial direction of the lifting rod 113 uniformly. Since the first spring 105 is adopted to push the steel balls, there are totally three groups of similar control mechanisms distributed around the lifting rod 113 uniformly, three steel balls lock the lifting rod 113 respectively under pressure of the first spring 105, such that it is convenient for the lifting rod 113 to form rolling frictions with the spherical surfaces of the steel balls in the moving process.

In addition, in order to facilitate fixing the support frame 107, the control mechanism further comprises a support frame cover 104 that covers on the support frame 107 in a snap-fit manner, and a lower end of the support frame cover 104 is connected with a cover body.

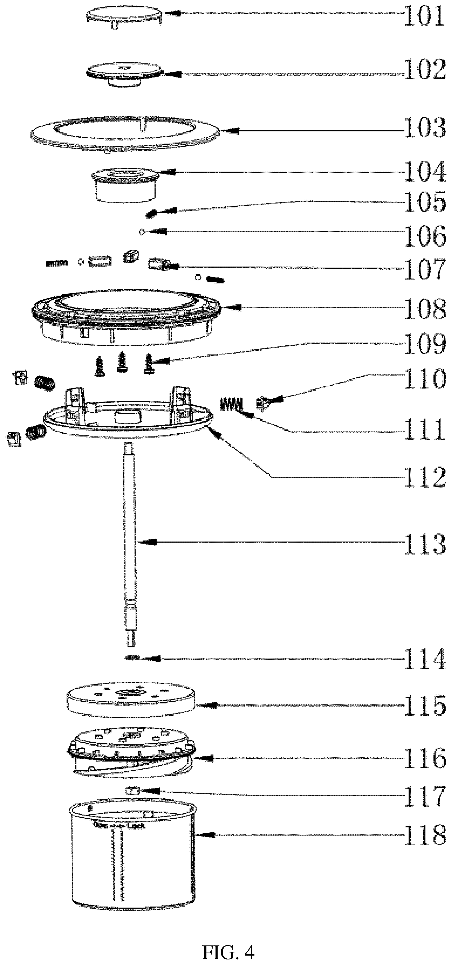

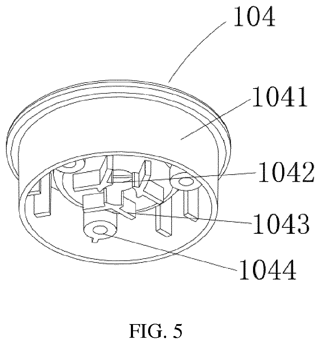

Preferably, please refer to FIG. 4 and FIG. 5, the support frame cover 104 comprises a connecting casing fixed with the cover body, a first circular hole 1042 arranged on the connecting casing 1041 and configured to be passed through by the lifting rod 113, and a fastening block 1043 arranged in the connecting casing 1041 and configured to engage the support frame 107. The fastening block 1043 is conducive to fix the support frame 107 to the connecting casing 1041, and to further ensure corresponding functions of the roll balls 106 and the first spring 105. In addition, considering accuracy and convenience of positioning the connecting casing 1041 and the cover body, the connecting casing 1041 is provided therein with one or more first locating plunger(s) configured to be connected with the cover body.

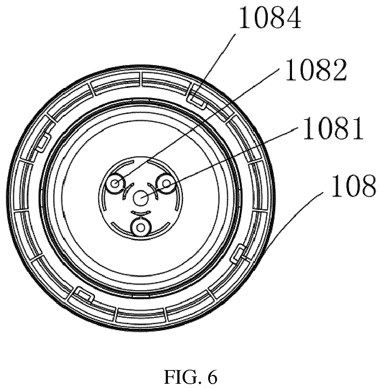

Preferably, please refer to FIGS. 6-9, in order to facilitate assembly and disassembly of the cover body and use the cover body more conveniently, the cover body comprises an upper cover body 108, and a lower cover body inserted in the upper cover body 108. Furthermore, the upper cover body 108 comprises a second circular hole 1081 configured to be passed through by the lifting rod 113, one or more second locating plunger(s) arranged around the second circular hole 1081, a connecting ring 1083 arranged at a lower end surface of the upper cover body 108 and configured to be connected with the lower cover body 112, and one or more insertion holes distributed at intervals on the upper cover body 108. In this embodiment, by aligning the second locating plunger(s) 1082 with the first locating plunger(s) 1044, the connection between the upper cover body 108 and the support frame cover 104 can be facilitated. The arranged insertion holes can facilitate assembly between the upper cover body 108 and the lower cover body 112, so that the upper cover body 108 can be connected with both the support frame cover 104 and the lower cover body 112 more conveniently. In addition, there is an upper cover body protection plate 103 connected on an upper end of the upper cover body 108, the upper cover body protection plate preferably adopts a stainless steel plate, thereby protecting the upper cover body 108.

In addition, for facilitating the assembly between the lower cover body 112 and the upper cover body 108, the lower cover body 112 comprises a third circular hole 1121 configured to be passed through by the lifting rod 113 and insertion blocks 1122 matching with the insertion holes. Besides, considering that the lower cover body 112 and the upper cover body 108 should not be prone to loose in a use process, the connection ring 1083 is provided thereon with one or more bayonet(s), and the lower cover body 112 is provided thereon with one or more fastener(s) configured to engage in the bayonet(s). Therefore, in a use process, the fastener(s) can engage in the connecting ring 1083 of the upper cover body 108, and there exists certain chucking intensity. Preferably, the connecting ring 1083 is designed to be an ironware ring. It needs to be noted that the ironware ring can adopt common knowledge in the prior art.

In addition, considering the ascending or descending process of the lifting rod 113, in order to generate buffering for the upper cover body 108 and the lower cover body 112, each bayonet 1084 is further provided with a connecting pole 1085 communicated with the bayonet 1084, the connecting pole 1085 is provided therein with a second spring 111, and one end of the second spring 111 is connected with corresponding snap fastener 110.

Furthermore, for a convenient manipulation, one end of the lifting rod 113 is further provided with a rod cap 102 configured to lift or lower the lifting rod 113. In addition, in order to protect the rod cap 102 and to lift and lower the rod cap 102 conveniently the rod cap 102 is provided thereon with a rod cap protection plate 101 configured to protect the rod cap 102, and the rod cap protection plate 101 is in a snap-fit connection with the rod cap 102.

In addition, in order to facilitate the use of the filtering cup 118, the filtering cup 118 is provided thereon with a filtering support 116, and the filtering support 116 is provided thereon with a filtering cup protection plate 115. The filtering cup protection plate 115 preferably adopts a stainless steel plate. A lower end of the lifting rod 113 passes through the filtering support 116 and is fixed by nuts 117. Besides, a connection between the filtering cup protection plate 115 and the lifting rod 113 can be provided with a flat gasket 114, so as to provide buffering and protective functions. In addition, in order to further improve a stability of the connection between the upper cover body 108 and the lower cover body 112, the upper cover body 108 and the lower cover body 112 can also be fixed by screws 109. It needs to be noted that all of the roll balls 106, the first springs, the charging base 300, the nuts 117 and the screws 109 can adopt common knowledge in the prior art to implement corresponding functions, and it is not repeatedly described herein.

In addition, the present invention further provides a tea steaming health kettle, please refer to FIGS. 1-3, the tea steaming health kettle comprises a kettle body 200, a charging base 300 configured to support the kettle body 200 and provide power supply for the kettle body 200, and the tea steeping assembly 100; the kettle body 200 is detachably connected with the tea steeping assembly 100. Preferably, the kettle body 200 is designed to be a heat-resistant glass cup, so that it is convenient to observe the color of tea water during a tea steeping process.

In use of the tea steaming health kettle of this embodiment of the present invention, in the lifting process of the lifting rod 113, the lifting rod 113 is in rolling contact with steel balls, the whole manipulation process is smooth and effortless, and the upper cover body 108 and the lower cover body 109 won't be brought away. When the lifting rod 113 is lifted to a certain height, the limiting groove at the lower part of the lifting rod 113 is aligned with the positions of the steel balls, , under the actions of pushing forces of the first springs 105, the steel balls enter the limiting groove, such that the lifting rod 113 is not prone to continue to descend. When the filtering cup 118 requires being put into hot water in the kettle body 200, the rod cap 102 is slightly pressed, such that the steel balls roll out of the limiting groove of the lifting rod 113, and thus the lifting rod 113 can smoothly descend and drive the filtering cup 118 to enter hot water.

The aforementioned embodiments are only preferred embodiments of the present invention, and should not be regarded as being limitation to the present invention. Any modification, equivalent replacement, improvement, and so on, which are made within the spirit and the principle of the present invention, should be included in the protection scope of the present invention.

## Claims

1. A tea steeping assembly comprising a filtering cup arranged in a kettle body and configured to accommodate tea leaves, a lifting rod connected with the filtering cup and configured to lift or lower the filtering cup, a control mechanism matching with the lifting rod rollingly and configured to control the lifting rod to ascend or descend, and a cover body covering on the kettle body in a snap-fit manner.

2. The tea steeping assembly according to claim 1, wherein the control mechanism comprising roll balls matching with the lifting rod rollingly, elastic elements connected with the roll balls and configured to push the roll balls to rotate, and a support frame configured to support the roll balls and the elastic elements; wherein the lifting rod is provided thereon with a limiting groove matching with the roll balls and configured to limit a lifting height of the lifting rod.

3. The tea steeping assembly according to claim 2, wherein there are three groups of control mechanisms distributed along a radial direction of the lifting rod uniformly.

4. The tea steeping assembly according to claim 2 or claim 3, wherein the control mechanism further comprises a support frame cover covering on the support cover in a snap-fit manner, and a lower end of the support frame cover is connected with the cover body.

5. The tea steeping assembly according to claim 4, wherein the support frame cover comprises a connecting casing fixed with the cover body, a first circular hole arranged on the connecting casing and configured to be passed through by the lifting rod, a plurality of first locating plungers arranged in the connecting casing and configured to be connected with the cover body, and a fastening block arranged in the connecting casing and configured to engage the support frame.

6. The tea steeping assembly according to any one of claims 1-3, wherein the cover body comprises an upper cover body and a lower cover body inserted in the upper cover body; the upper cover body comprises a second circular hole configured to be passed through by the lifting rod, a plurality of second locating plungers arranged around the second circular hole, a connection ring arranged at a lower end surface of the upper cover body and configured to be connected with the lower cover body, and a plurality of insertion holes distributed at intervals on the upper cover body; the lower cover body comprises a third circular hole configured to be passed through by the lifting rod, and a plurality of insertion blocks matching with the insertion holes.

7. The tea steeping assembly according to claim 6, wherein the connection ring is provided thereon with one or a plurality of bayonet(s), the lower cover body is provided thereon with one or a plurality of snap fastener(s) configured to engage in the bayonet(s); each bayonet is provided with a connecting pole communicated with the bayonet, and the connecting pole is provided therein with a spring, and one end of the spring is connected with the corresponding fastener.

8. The tea steeping assembly according to any one of claims 1-3, wherein one end of the lifting rod is provided with a rod cap configured to lift the lifting rod or press the lifting rod down; the rod cap is provided thereon with a rod cap protection plate configured to protect the rod cap, and the rod cap protection plate is in a snap-fit connection with the rod cap.

9. A tea steaming health kettle comprising the tea steeping assembly according to any one of claims 1-8.

10. The tea steaming health kettle according to claim 9, wherein the kettle body is a heat-resistant glass cup.
